# EUROPEAN PATENT APPLICATION

(11) **EP 2 719 534 A2**
(43) Date of publication of application: **16.04.2014**
(21) Application number: 13177509.0
(22) Date of filing: 22.07.2013
(51) Int. Cl.: B32B 33/00, B32B 38/10, B65D 65/40, B32B 37/12, B32B 27/30

(54) **Method of producing a high barrier packaging material and high barrier packaging material**

(30) Priority: 10.10.2012 US 201213648352
(71) Applicant: Polytype Converting S.A., 1701 Fribourg (CH)
(72) Inventor: Krebs, Ferdinand, 3084 Wabern (CH); Schweizer, Peter, 3184 Wünnewil (CH)
(74) Representative: Schwabe - Sandmair - Marx

(57) **Abstract**

The invention relates to a method of producing a high barrier packaging material comprising applying a polymer dispersion or polymer solution to a first film (1), drying the polymer dispersion or polymer solution to form a polymer layer (5), applying a second film (3) to the polymer layer side of the first film (1) and peeling off the first film (1), while the polymer layer (5) adheres to the second film (3).

## Description

The invention relates to a method of producing a high barrier packaging material. Furthermore, the invention relates to a high barrier packaging material.

For various applications high barrier packaging material is needed. In particular pharmaceutical products, food, medical devices and small consumer goods need protection against moisture, gas, in particular oxygen, and/or aroma. High barrier blister packs formed by thermoforming are commonly known as unit-dose packaging. The packaging material usually comprises a thermoplastic base material which supports a barrier layer. Preferably a polyvinylidene chloride (PVdC) layer is used as barrier layer.

Typically a polymer layer is formed by applying a polymer dispersion or polymer solution to a web of the base material. The base material has to be suitable for thermoforming. As base material thermoplastics such as polyvinylchloride (PVC), copolymer of PVC with polyvinyl-acetate (PVAc), amorphous polyester (A-PET), cyclic olefin copolymer (COC), polyethylene (PE), cast polypropylene (CPP) and polylactic acid (PLA) may be used. Alternatively the base material may be a laminate such as PVC with PE. As coating device commonly known coating devices such as airknife, reverse gravure roll etc. may be used. For an enhanced barrier the polymer is typically applied in several layers.

In EP 0 977 636 B1 a method of producing a high barrier packaging material comprising a PVdC layer is disclosed. The PVdC layer is formed by applying an aqueous dispersion of PVdC to a strip-like base material such as PVC and subsequently drying the dispersion. In such a method the drying temperature is limited by the resistance to thermal distortion of the base material. Consequently long heating units need to be used and/or the production speed has to be slow.

An objective technical problem of the invention is to provide an improved method of producing a high barrier packaging material.

The method of producing a high barrier packaging material according to the invention comprises: Applying a polymer dispersion or polymer solution to a first film, drying the polymer dispersion or polymer solution to form a polymer layer, applying a second film to the polymer layer side of the first film, and peeling off the first film, while the polymer layer adheres to the second film. By the method according to the invention higher drying temperatures than in the state of the art methods of producing a high barrier packaging material may be used. Therefore, the dimension of the drying unit may be reduced and/or the production speed may be increased. Accordingly, the production costs may be decreased.

Another advantage of the invention is that due to the potentially higher temperature of the polymer towards the end of the drying process the permeability of the polymer may be increased and therefore the removal of residual moisture in the coated layer may be facilitated. Residual moisture in the polymer layer is undesired because the residual water may outgas during thermoforming and may condense onto the thermoforming device which might lead to corrosion. Furthermore, the higher temperature of the polymer together with a controlled cooling procedure may improve the crystallization of the polymer layer. Accordingly, the barrier properties of the polymer layer may be improved with a higher degree of crystallinity of the polymer.

The first film is peeled off the second film while the polymer layer adheres to the second film. In this way the high barrier packaging material may be further processed without the first film, the same way as high barrier packaging material according to the state of the art. An adhesive layer between the polymer layer and the second film may improve peeling off the first film. Advantageously a separation layer can be provided between the first film and the polymer layer. The separation layer may further improve peeling off the first film. Exemplarily a silicone release coating may be applied to the first film as a separation layer. After peeling off the first film may be re-used as a carrier film for the polymer coating. In an advantageous embodiment the first film may be re-used several times as a carrier film for the polymer coating.

In one embodiment the roughness of the first film may be controlled for example by means of embossing of said film or by the topography of the separation layer applied prior to the polymer coating. Therefore, after peeling off the first film the structure remains on the polymer layer as a negative image of the structure of the first film. By controlling the surface roughness of the polymer layer the coefficient of friction of the polymer surface may be modified and this may be advantageous for the runnability on machines for further processing steps.

The application of the polymer dispersion or polymer solution may be accomplished by commonly known coating processes. For example a curtain coater, an airknife, a reverse-gravure roll or a slot die may be used for applying the polymer dispersion or polymer solution to the first film. In one embodiment of the invention the steps of applying a polymer dispersion or polymer solution and subsequently drying the polymer dispersion or polymer solution to form a polymer layer may be repeated. Thereby several polymer layers may be formed on the first film.

Preferably the polymer dispersion or polymer solution comprises polyvinylidene chloride (PVdC) and/or ethylene vinyl alcohol (EVOH) and/or polyvinyl alcohol (PVOH). Water or an organic solvent may be used as the dispersion medium or solvent. Preferably the dispersion or solution may be an aqueous dispersion or solution. More preferably the dispersion may be an aqueous dispersion of PVdC. Accordingly, the polymer layer may be a PVdC layer. The PVdC layer may form a barrier for both, moisture and oxygen.

The first film or the second film may be applied as a foil. In an advantageous embodiment the first film or the second film may be formed by a calendar. In one embodiment the first film and the second film may be laminated. In another embodiment the second film may be laminated as a foil onto the polymer layer. In yet another embodiment the second film is formed by applying the material of the second film via a free-falling curtain. In one embodiment of the invention the application of the second film to the polymer layer side of the first film may be performed directly after formation of the second film, for example in-line with a calendar used for forming the second film. Thereby, transport and storage costs may be reduced.

In one embodiment the first film may have a higher resistance to thermal distortion than the second film. Values for the resistance to thermal distortion are relative, because they depend on several different parameters. The resistance to thermal distortion may be specified as a Vicat softening temperature. The Vicat softening temperature may be determined according to the method ISO 306 (ASTM D1525).

A laminating adhesive may be applied between the polymer layer and the second film. The laminating adhesive can for example be applied upon the polymer layer and/or upon the second film. The material of the second film may be applied together with the laminating adhesive. In another embodiment the material of the second film and the laminating adhesive are applied subsequently. The laminating adhesive guarantees a sufficient adherence of the polymer layer to the second film. The laminating adhesives may be selected from the group consisting of aqueous two component polyurethane (PU), solvent based two component polyurethane, solventless one component polyurethane, solventless two component polyurethane and radiation curable adhesives. The radiation curable adhesives may be curable by UV radiation or by electron beam.

Alternatively lamination of the first film and the second film may be performed without a laminating adhesive, for example via heat laminating. The first film with the polymer may be heat treated, in particular to reach its thermoplastic state, and then laminated to the second film. In one embodiment this procedure may be performed after the formation of the last polymer layer. Thus, unnecessary heating and cooling operations of the first film can be avoided. In one embodiment the second film may be heat treated prior to the lamination process.

The method of producing a high barrier packaging material may comprise thermoforming of the packaging material. By thermoforming the packaging material a blister pack for pharmaceuticals, food, medical devices or small consumer goods may be formed.

In a preferred embodiment the first film may comprise a material selected from the group consisting of polypropylene, oriented polypropylene, polyester, oriented polyester, high density polyethylene, low density polyethylene, polyvinylchloride, polyamide, aluminum and combinations thereof. The second film can comprise a material selected from the group consisting of polyvinylchloride (PVC), copolymer of PVC with polyvinyl-acetate (PVAc), amorphous polyester (A-PET), cyclic olefin copolymer (COC), polyethylene (PE), cast polypropylene (CPP), polylactic acid (PLA) and combinations thereof.

In an advantageous embodiment the thickness of the first film may be smaller than the thickness of the second film. In one embodiment the thickness of the first film is between 1 µm and 100 µm. In another embodiment the thickness of the first film is between 10 µm and 70 µm. In yet another embodiment the thickness of the first film is between 20 µm and 40 µm. By applying a polymer dispersion or polymer solution onto a first film with a thickness in this range longer rolls may be formed compared to applying the polymer dispersion or polymer solution directly onto a thicker thermoplastic film according to the state of the art. In other words the rolls may comprise more material than rolls with the same diameter according to the state of the art. This results in economic advantages as the amount of waste from roll changes and the operator time for the roll handling and the splice preparation can be reduced.

In an advantageous embodiment the thickness of the second film may be in a range suitable for thermoforming the second film. The thickness of the second film may be between 80 µm and 1000 µm. In one embodiment the thickness of the second film is between 150 µm and 800 µm. In another embodiment the thickness of the film is between 200 µm and 500 µm.

In one embodiment the resistance to thermal distortion of the first film is 100 °C or more. In another embodiment the resistance to thermal distortion of the first film is 110 °C or more. The resistance to thermal distortion of the second film on the other hand can be below 100 °C. In one embodiment the resistance to thermal distortion of the second film is below 80 °C. In another embodiment the resistance to thermal distortion of the second film is below 70 °C. The provided values relate to the Vicat softening temperature and may be determined according to the method ISO 306 (ASTM D1525). The analytical value of the Vicat softening temperature indicates the relative resistance to thermal distortion for different polymer films. The actual maximum service temperature of a film in a converting process may differ from that value.

By using a first film with a higher resistance to thermal distortion for applying the polymer dispersion or polymer solution a higher drying temperature can be used than for applying a polymer dispersion or polymer solution directly onto a film with a lower resistance to thermal distortion according to the state of the art. In one embodiment a drying temperature between 65 °C and 150 °C is used. In another embodiment a drying temperature of 80 °C to 130 °C is used. In yet another embodiment a drying temperature of 100 °C to 120 °C is used. The drying temperature is defined as the temperature the film reaches during the drying process. The temperature of the drying air may be higher than the temperature the film reaches during the drying process.

A high barrier packaging material according to another aspect of the invention comprises: A thermoplastic film, a polymer layer and a laminating adhesive, wherein the laminating adhesive comprises a material selected from the group consisting of aqueous two component polyurethane (PU), solvent based two component polyurethane, solventless one component polyurethane, solventless two component polyurethane and radiation curable adhesives.

The characteristics of the dependent claims may be combined with the characteristics of claim 1 in any combination. Further embodiments of the invention are based on a combination of the characteristics of the claims, the description or the figures.

In the following the invention is described in detail by means of the figures. The figures illustrate:
- Fig. 1: in a schematic diagram a high barrier packaging material according to the state of the art and
- Fig. 2: in a schematic diagram the method of producing a high barrier packaging material according to one embodiment of the invention.

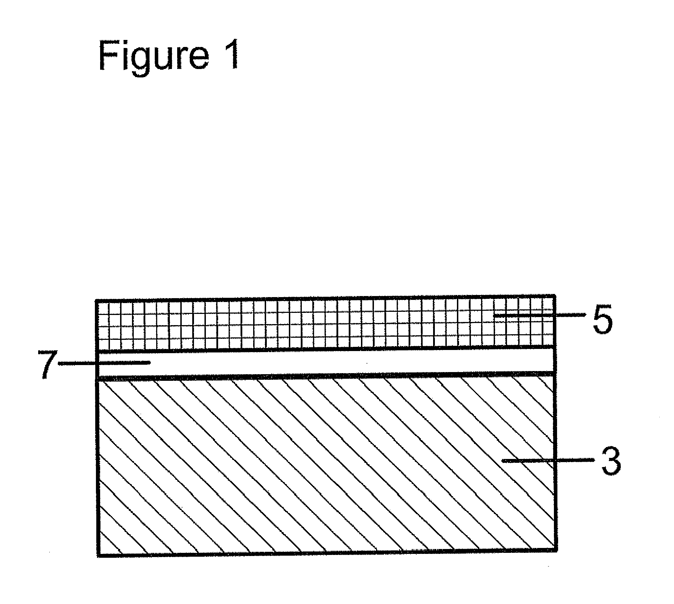

A high barrier packaging material according to the state of the art shown in Fig. 1 comprises a film 3 of a thermoplastic base material such as PVC. In the packaging material according to Fig. 1 a primer 7 is applied to the surface of the film 3. On the primer 7 a polymer layer 5 is provided. Preferably the polymer layer 5 may be a PVdC layer. Alternatively, several polymer layers may be provided on the primer 7. In the state of the art primer 7 is applied in liquid form and then dried. Typical primers comprise water based polyurethane or solvent based two component polyurethane. Subsequently the polymer dispersion or polymer solution is applied directly on the surface of the primer for example via a reverse gravure roll and dried to form the polymer layer 5. The drying temperature is limited by the resistance to thermal distortion of film 3.

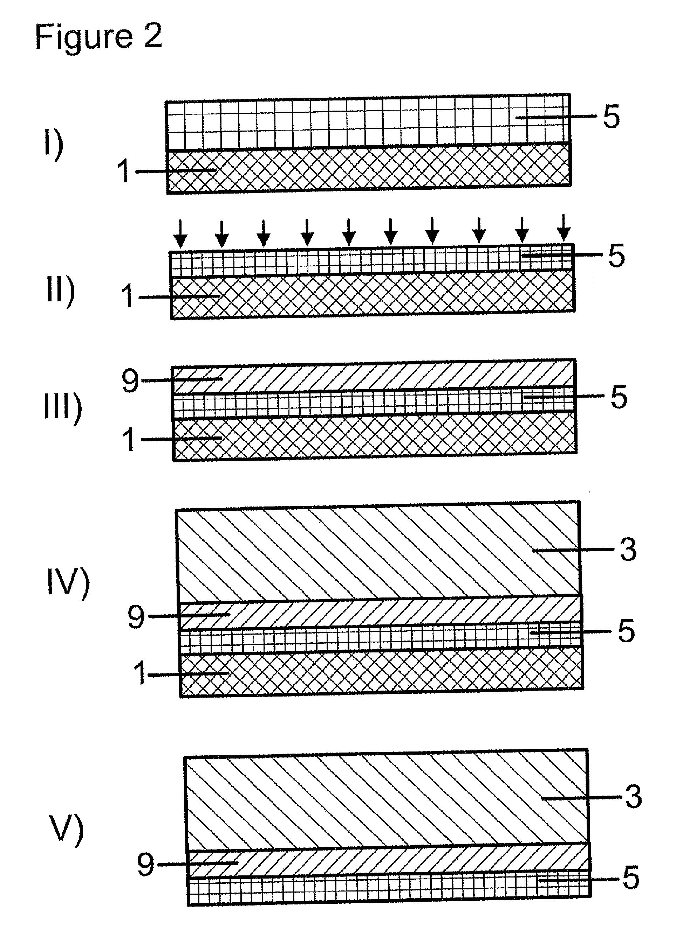

One embodiment of the method of producing a high barrier packaging material according to the invention is illustrated in Fig. 2. In step I) a polymer dispersion or polymer solution is applied to a first film 1. The polymer dispersion may be an aqueous dispersion of PVdC. The application of the dispersion or solution may be performed via a free-falling curtain. Optionally a separation layer (not shown) is provided on the first film 1 before application of the polymer dispersion or polymer solution.

In step II) the polymer dispersion or polymer solution is dried to form a polymer layer 5. The drying temperature is limited by the resistance to thermal distortion of the first film 1. The drying temperature can be between 65 °C and 150 °C. Steps I) and II) may be repeated to form several polymer layers.

In step III) a laminating adhesive 9 is provided upon the polymer layer 5. Alternatively the laminating adhesive 9 and the polymer layer 5 may be applied together, typically via a double-layered free-falling curtain. In step IV) a second film 3 is applied to the polymer layer side of the first film 1. The second film 3 according to this embodiment of the invention (see Fig. 2) corresponds to film 3 of the thermoplastic base material in the packaging material according to the state of the art (see Fig. 1). As shown in Fig. 2 steps III) and IV) may be performed subsequently. Alternatively the laminating adhesive 9 and the second film 3 may be applied together to the polymer layer side of the first film 1, exemplarily via co-extrusion.

In step V) the first film 1 is peeled off the second film 3, while the polymer layer 5 adheres to the second film 3 via the laminating adhesive 9.

The packaging material produced by this method may be further processed by thermoforming. One exemplary application of the packaging material produced by the method according to the invention is a blister pack used for example for pharmaceutical products, food, medical devices and small consumer goods.

## Claims

1. Method of producing a high barrier packaging material comprising
a) applying a polymer dispersion or polymer solution to a first film (1),
b) drying the polymer dispersion or polymer solution to form a polymer layer (5),
c) applying a second film (3) to the polymer layer side of the first film (1) and
d) peeling off the first film (1), while the polymer layer (5) adheres to the second film (3).

2. Method according to Claim 1, wherein the polymer dispersion or polymer solution comprises polyvinylidene chloride (PVdC) and/or ethylene vinyl alcohol (EVOH) and/or polyvinyl alcohol (PVOH).

3. Method according to Claim 1 or 2, wherein the first film (1) has a higher resistance to thermal distortion than the second film (3) and/or the thickness of the first film (1) is smaller than the thickness of the second film (3).
Method according to one of the preceding Claims, wherein a laminating adhesive (9) is applied between the polymer layer (5) and the second film (3), preferably wherein a laminating adhesive (9) is applied upon the polymer layer (5) and/or upon the second film (3).

4. Method according to one of the preceding Claims, further comprising thermoforming of the packaging material.

5. Method according to one of the preceding Claims, wherein the first film (1) comprises a material selected from the group consisting of polypropylene, oriented polypropylene, polyester, oriented polyester, high density polyethylene, low density polyethylene, polyvinylchloride, polyamide, aluminum and combinations thereof.

6. Method according to one of the preceding Claims, wherein the second film (3) comprises a material selected from the group consisting of polyvinylchloride (PVC), copolymer of PVC with polyvinyl-acetate (PVAc), amorphous polyester (A-PET), cyclic olefin copolymer (COC), polyethylene (PE), cast polypropylene (CPP), polylactic acid (PLA) and combinations thereof.

7. Method according to one of the preceding Claims, wherein the first film (1) has a thickness between 1 µm and 100 µm.

8. Method according to one of the preceding Claims, wherein the second film (3) has a thickness between 80 µm and 1000 µm.

9. Method according to one of the preceding Claims, wherein the drying temperature is between 65 °C and 150 °C.

10. Method according to one of the preceding Claims, wherein the resistance to thermal distortion of the first film (1) is 100 °C or more.

11. Method according to one of the preceding Claims, wherein the resistance to thermal distortion of the second film (3) is below 100 °C.

12. Method according to one of the preceding Claims, wherein a separation layer is provided between the first film (1) and the polymer layer (5).

13. High barrier packaging material produced according to one of the preceding Claims.

14. High barrier packaging material comprising
a) a thermoplastic film (3),
b) a polymer layer (5) and
c) a laminating adhesive (9), wherein the laminating adhesive comprises a material selected from the group consisting of aqueous two component polyurethane (PU), solvent based two component polyurethane, solventless one component polyurethane, solventless two component polyurethane and radiation curable adhesives.
